**Europäisches Patentamt**

**European Patent Office**

**Office européen des brevets**

(19)

(11) Veröffentlichungsnummer: **0 388 666**
**A1**

## (12) EUROPÄISCHE PATENTANMELDUNG

(21) Anmeldenummer: **90103773.9**

(22) Anmeldetag: **27.02.90**

(51) Int. Cl.5: **C09J 11/04**

(30) Priorität: **11.03.89 DE 3907913**

(43) Veröffentlichungstag der Anmeldung:
**26.09.90 Patentblatt 90/39**

(84) Benannte Vertragsstaaten:
**BE CH DE FR IT LI NL SE**

(71) Anmelder: **BAYER AG**

**D-5090 Leverkusen 1 Bayerwerk(DE)**

(72) Erfinder: **Lange, Horst, Dr.**
**Kreuzkamp 42**
**D-4630 Bochum(DE)**
Erfinder: **Gebauer, Klaus, Dr.**
**Via Monte Cervino**
**24100 Bergamo / Osio Sopra(IT)**

(54) Graphitkleber und Verfahren zur Herstellung von Klebeverbindungen zwischen Graphitteilen.

(57) Die vorliegende Erfindung betrifft einen Ein- oder Mehrkomponentenkleber zum Verbinden von Graphitteilen sowie Verfahren zur Herstellung dauerhafter Klebeverbindungen zwischen Graphitformteilen.

EP 0 388 666 A1

## Graphitkleber und Verfahren zur Herstellung von Klebeverbindungen zwischen Graphitteilen

Die vorliegende Erfindung betrifft einen Ein- oder Mehrkomponentenkleber zum Verbinden von Graphitteilen sowie Verfahren zur Herstellung dauerhafter Klebeverbindungen zwischen Graphitformteilen.

In der Hochtemperaturtechnik ist Graphit ein häufig verwendetes Material, das sich durch seine gute elektrische und thermische Leitfähigkeit, seine chemische Resistenz gegenüber einer Vielzahl von Stoffen und seine hohe mechanische Festigkeit auch bei hohen Temperaturen auszeichnet. Dank seiner ausgezeichneten mechanischen Bearbeitungsfähigkeit können auch sehr kompliziert aufgebaute Konstruktionselemente problemlos hergestellt werden

Für bestimmte Anwendungszwecke, wie z.B. für die Reinstoffmetallurgie von Silicium, wurden Spezialgraphite entwickelt, die durch ein sehr feinporiges Gefüge und hohe Dichten ($> 1{,}70$ $gcm^{-3}$) charakterisiert sind und die kommerziell auch in Qualitäten sehr hoher chemischer Reinheit angeboten werden. Zur Herstellung dieser Graphitqualitäten werden üblicherweise isostatische Verdichtungsverfahren eingesetzt. Bedingt durch die Maximalabmessungen der isostatischen Presse ist es allerdings nicht möglich, beliebig große Graphithalbzeuge herzustellen

Bei der Herstellung sehr großer Konstruktionselemente aus Graphit, aber auch sehr häufig bei der Fertigung kompliziert aufgebauter Graphitformteile, die entweder gar nicht oder nur sehr ungünstig aus einem Stück gefertigt werden können, ist man daher auf Verbindungstechniken, wie Steck-, Schraub- oder Klebeverbindungen, angewiesen.

Die RO-A 86793 beschreibt einen Zweikomponentenkleber für Graphit, dessen eine Komponente aus einem aliphatischen Diamin, hydrolysiertem Polyacrylnitril und Graphit und dessen zweite Komponente aus einem Epoxidharz und Ruß besteht. In der GB-A 2 169 273 wird ein Klebemittel für Graphit beschrieben, das aus einer Lösung von Phenol-, Furan- oder Epoxidharz in einem oragnischen Lösungsmittel, wie Methanol oder Ethanol, gegebenenfalls unter Zusatz von Ölpech und/oder Kohlepech bzw oxidierten Pechteilchen besteht. Die DE-A 3 614 574 beschreibt ein Graphitklebemittel, in dem geschmolzenes Phenol-, Epoxid- oder Furanharz als Klebestoff verwendet wird. Aus der DE-A 3 635 912 geht ein Graphitklebemittel aus warmhärtendem Phenol-, Epoxid-oder Furanharz hervor.

All diesen Klebemitteln ist jedoch eine beträchtlich reduzierte Festigkeit der Klebestelle nach dem Vercracken der organischen Anteile gemeinsam, was sich besonders störend beim Verkleben von Graphitqualitäten mit einer Dichte $> 1{,}70$ $gcm^{-3}$ bemerkbar macht

In der JA 82-A 77077 wird ein Klebemittel zum Verbinden von Körpern aus kohlenstoffhaltigem Material beschrieben, das aus einer polymeren Silikonverbindung besteht, die bei der thermischen Zersetzung an der Klebestelle graphithaltiges Siliciumcarbid bildet. Beim Verdichten hochdichter Graphitteile liefert aber auch dieses Klebemittel keine besonders festen Klebestellen, da die polymeren Silikon- bzw. Silanverbindungen beim Vercracken unter hohen Masseverlusten zu porösen, voluminösen graphithaltigen Körpern mit gleichzeitig nur sehr geringer Ausbeute an Siliciumcarbid zerfallen.

Weiterhin ist aus der SU-A 834069 ein hochtemperaturbeständiges Klebemittel für Metalle, Glas und Graphit bekannt, das aus Wasserglas, Natriumaluminat, einem Alkalimetallhydroxid und amorphem Bor als Füllmaterial besteht. Bei langdauernder Hochtemperaturbelastung, insbesondere bei Temperaturen oberhalb von $1000\,^\circ C$ kommt es jedoch zu chemischen Reaktionen zwischen dem $SiO_2$ des Wasserglases, dem Natriumaluminat sowie dem Graphit, die die mechanische Festigkeit der Klebestelle herabsetzen Ferner ist durch den Natriumaluminat-, den Alkalimetallhydroxid- und den Boranteil des Klebers eine Kontaminationsquelle gegeben, die eine Reinstoffschmelze, wie z.B. eine Reinsiliciumschmelze, beim Kontakt mit der Klebestelle in nicht akzeptabler Weise verunreinigen kann.

Die SU-A 1 162 564 beschreibt eine Paste zum Zusammenkitten von Graphit, die Graphitpulver, Furfurol, ein Metallsalz und Tsiakrin als Polymerisationsbeschleuniger enthält. Hier muß ebenfalls eine reduzierte Festigkeit der Klebestelle nach dem Vercracken des polymerisierten Furfurols sowie eine mögliche Kontamination von Reinstoffschmelzen durch herausdiffundierende Metallspuren beim Kontakt der Schmelze mit der Klebestelle in Kauf genommen werden.

Schließlich geht aus der SU-A 1 240 778 ein Klebemittel zur Verbindung von Graphitteilen hervor, das aus Graphitpulver, Furfurol, Resorcinol, Orthophosphorsäure und einem Metallpulver, das keine Carbide bildet (Ni oder Cu), besteht. Auch hier wird die Festigkeit der Klebestelle nach dem Vercracken der organischen Anteile herabgesetzt und es besteht die Gefahr, eine mit der Klebestelle in Kontakt gebrachte Reinstoffschmelze mit Phosphor- oder Fremdmetallspuren zu kontaminieren.

Es stellte sich daher die Aufgabe, einen Graphitkleber zu finden, mit dem die oben beschriebenen Nachteile vermieden werdend Darüber hinaus sollten vom Kleber keine störenden Einflüsse auf Reinstoffschmelzen ausgehen, die möglicherweise mit den verklebten Graphitteilen in Kontakt gebracht werden können.

Völlig überraschend wurde nun gefunden, daß die gestellte Aufgabe dadurch gelöst wird, daß die zu verbindenden Graphitteile unter der Einwirkung von flüssigem Silicium miteinander verklebt werdend.

Gegenstand dieser Erfindung ist ein Ein- oder Mehrstoffkomponentenkleber zum Verbinden von Graphitformteilen, wobei mindestens eine Komponente diesem Ein- oder Mehrkomponentenklebers, vorzugsweise aus der Klasse der Reaktivklebstoffe, aus Siliciumpulver besteht. Bevorzugt weist dabei das Silicium eine Partikelgröße < 300 $\mu$m auf.

In einer bevorzugten Ausführungsform enthält mindestens eine Komponente des Ein- oder Mehrkomponentenklebers, vorzugsweise aus der Klasse der Reaktionsklebstoffe, ein Gemisch aus Siliciumpulver einer bevorzugten Partikelgröße < 300 $\mu$m und Graphitpulver einer bevorzugten Partikelgröße < 300 $\mu$m mit einem Gewichtsanteil von mindestens 1 Mol.-% Graphit, vorzugsweise mit einem Gewichtsanteil von 50 Mol.-% Graphit.

Eine weitere bevorzugte Ausführungsform des erfindungsgemäßen Ein- oder Mehrkomponentenklebers ist dadurch gekennzeichnet, daß eine Komponente des Mehrkomponentenklebers Siliciumpulver und eine andere Komponente Graphitpulver enthält, mit Partikelgrößen jeweils < 300 $\mu$m.

Besonders gute Ergebnisse werden erzielt, wenn das Silicium eine Verunreinigungsgesamtkonzentration von < 10 000 ppm aufweist.

Es hat sich gezeigt, daß eine dauerhafte Klebeverbindung zwischen Graphitteilen allein dadurch erreicht werden kann, die miteinander kontaktierten Flächen oder Stellen der Graphitformteile ganz oder teilweise der Einwirkung flüssigen Siliciums ausgesetzt werden.

Gegenstand dieser Erfindung ist auch ein solches Verfahren.

Diese Lösung des Problems ist unerwartet, da Silicium sich bei der Erstarrung um ca. 10 Volumenprozent ausdehnt und daher die Gefahr besteht, daß das Formteil zerstört werden kann. Es hat sich jedoch gezeigt, daß die Volumenausdehnung des Siliciums sowohl von einer Ausdehnung in die Porenräume der Graphitformteile als auch von einer vollständigen oder partiellen Umwandlung des Siliciums in Siliciumcarbid, die mit einer Dichtezunahme verbunden ist, wirkungsvoll aufgefangen werden kann. Darüber hinaus kann es zum Beispiel beim Verkleben von Graphitsorten niedriger Dichte, die in ihrem Porenvolumen sehr viel flüssiges Silicium aufnehmen können, oder beim Verkleben von Graphitqualitäten mit inhomogener Dichteverteilung vorteilhaft sein, durch eine gerichtete Kristallisation der in das Graphitgefüge eingedrungenen Siliciumschmelze etwaigen Spannungen, die durch die Volumenausdehnung des kristallisierenden Siliciums bei ungezielter Erstarrung entstehen könnten, von vornherein entgegenzuwirken.

Das Verkleben von Graphitbauteilen mit flüssigem Silicium eignet sich besonders gut auch zum Verbinden hochdichter Graphitqualitäten, deren Werkstoffdichte über 1,70 gcm$^{-3}$ hinausgeht; man erhält regelmäßig sehr feste Klebeverbindungen, die ihre hohe mechanische Stabilität auch bei hohen Temperaturen nicht verlieren, beständig gegen Temperaturzyklen und Thermoschock sowie thermisch und elektrisch leitfähig sind Bruchversuche an derart miteinander verklebten Graphitteilen führen zum Bruch im Graphitgefüge, jedoch nicht zum glatten Bruch oder Loslösen der Klebestelle.

Um eine mechanisch sehr stabile Klebeverbindung zwischen zwei Graphitformteilen zu schaffen, kann auf eine der zu verklebenden Kontaktstellen, Kontaktflächen oder in eine Klebefuge eine dünne Schicht Siliciumpulver aufgetragen werdend Die zu verklebende Stelle wird anschließend über den Schmelzpunkt des Siliciums aufgeheizt. Ist der Schmelzpunkt überschritten, dringt das flüssige Silicium unter partieller oder vollständiger Umwandlung (abhängig von Endtemperatur und Haltezeit) in SiC in die Porenräume der miteinander zu verbindenen Formteile ein. Nach der Abkühlung erhält man eine extrem feste Verbindung beider Graphitformteile.

Ebenso wie es möglich ist, auf die Kontaktstelle der Graphitteile Siliciumpulver aufzubringen, können an den Kontaktflächen auch schmale, dünne Siliciumstreifen oder dünne Siliciumscheibchen verwendet werden. Auch hier bildet sich nach dem Erhitzen über den Siliciumschmelzpunkt hinaus eine sehr feste Verbindung zwischen den zu verklebenden Graphitformteilen. Eine derartige Vorgehensweise eignet sich zum Beispiel zum Verkleben großflächiger Graphitformteile.

Eine bevorzugte Ausführungsform des erfindungsgemäßen Verfahrens ist also dadurch gekennzeichnet, daß zwischen die miteinander zu verklebenden Kontaktflächen oder Kontaktstellen der Formteile elementares Silicium in Pulverform mit einer bevorzugten Partikelgröße <300 $\mu$m und/oder in Form dünner Plättchen gebracht wird und die Kontaktstelle mindestens auf Schmelztemperatur des Siliciums, vorzugsweise auf Temperaturen im Bereich 1450 -2500 $^\circ$C, gebracht wird

Ferner ist es ebenfalls möglich, die miteinander zu verklebenden Graphitformteile zunächst mittels Schrauboder Steckverbindungen ineinander zu fügen und dann die zu verklebenden Stellen oder Flächen z.B. durch Tauchen in ein Bad flüssigen Siliciums mit einer Siliciumschmelze in Kontakt zu bringen.

Nach dem Abkühlen und der Entfernung eventuell noch anhaftender Siliciumreste sind die Graphitteile sehr fest miteinander verbundene Abhängig von der Kontaktzeit und der maximal erreichten Temperatur zeigt eine metallographische Untersuchung der Klebestelle eine mehr oder weniger vollständige Reaktion des eingedrungenen Siliciums mit dem Graphit der Formteile zu Siliciumcarbid.

Die Kontaktzeit zwischen Siliciumschmelze und den miteinander zu verklebenden Graphitteilen, die zum Erreichen der Endfestigkeit der Klebeverbindung erforderlich ist, orientiert sich grundsätzlich an der Formteilewandstärke im Bereich der Klebestelle, der Porosität, Kristallinität und Gefügestruktur der Graphit teile sowie an der Temperatur der Siliciumschmelze und dem gewünschten Umwandlungsgrad des in die Porenräume eingedrungenen Siliciums zu Siliciumcarbid.

Über die oben beschriebenen Varianten zum Verkleben von Graphitteilen unter der Einwirkung flüssigen Siliciums hinaus ist es besonders vorteilhaft, Siliciumpulver in einen beliebigen handelsüblichen Einkomponentenkleber oder in eine Komponente bzw. beide Komponenten eines beliebigen handelsüblichen Zweikomponentenklebers aus der Klasse der Reaktionsklebestoffe einzuarbeiten.

Eine bevorzugte Ausführungsform des erfindungsgemäßen Verfahrens besteht also darin, daß auf mindestens eine der zu verklebenden Kontaktflächen oder Kontaktstellen ein erfindungsgemäßer Ein- oder Mehrkomponentenkleber, der Gegenstand dieser Erfindung ist, aufgetragen wird, die Graphitteile miteinander an den zu verklebenden Stellen in Kontakt gebracht, die organischen Komponenten des Klebers durch Erhitzen auf 200 - 1000 °C unter Luftausschluß vercrackt werden und die Temperatur an den Kontaktstellen oder Kontaktflächen mindestens auf Schmelztemperatur des Siliciums, vorzugsweise in den Bereich 1450 - 2500 °C, erhöht wird.

In diesem Fall hat man nach dem Aushärten der organischen Komponenten des Klebers eine bereits bei Raumtemperatur sehr feste Verbindung zwischen den zu fügenden Graphitformteilen, die die weitere Handhabung und Weiterbearbeitung des zusammengesetzten Formteiles wesentlich erleichtert

Besonders vorteilhaft wird das Siliciumpulver in Polymerisationsklebestoffe auf Basis ungesättigter Polyester, auf Acrylat-, Cyanacrylat-, Epoxidharz- oder Polyurethan-Basis oder in Polykondensationsklebestoffe auf Phenol-, Resorcin-, Harnstoff-, Melamin-, Formaldehydharz-Basis, auf Basis von Siliconharzen, auf Basis polyaromatischer Klebeharze oder auf Basis von Polyimiden oder Polybenzimidazolen eingearbeitet, ohne daß jedoch in diesen Beispielen eine Beschränkung zu sehen ist.

Bei Anwendung derartiger, mit Siliciumpulver verfüllter Kleber zum Kleben von Graphitformteilen ist es vorteilhaft, die organischen Komponenten des Klebers nach dessen Aushärtung zunächst im Temperaturbereich von ca. 200 - 800 °C unter Luftausschluß vorsichtig zu vercracken, um zu vermeiden, daß die Klebestelle durch zu heftig freiwerdende gasförmige Zusetzungsprodukte zerstört wird. Nach Abschluß dieses Vercrackungsschrittes kann die Temperatur über den Schmelzpunkt des Siliciums hinaus gesteigert werden.

Um die thermische und elektrische Leitfähigkeit im Bereich der Klebestelle zu beeinflussen, kann neben dem Siliciumpulver auch Graphitpulver in die organischen Kleberkomponenten eingearbeitet werdend. Falls eine vollständige Umsetzung des Siliciums im Bereich der Klebezone zu Siliciumcarbid beabsichtigt ist, begünstigt ein äquimolares Verhältnis von Siliciumpulver zu Graphitpulver diesen Umwandlungsprozeß.

Eine weitere bevorzugte Ausführungsform des erfindungsgemäßen Verfahrens besteht darin, daß das im Bereich der Kontaktzone in das Gefüge der zu verbindenden Graphitformteile eingedrungene Silicium durch Erhitzen auf mindestens 1410 °C, vorzugsweise auf 1450 - 2500 °C, vollständig zu Siliciumcarbid umgewandelt wird

Zu besonders guten Ergebnissen gelangt man, wenn die Abkühlung der miteinander verklebten Graphitformteile in einem Temperaturgradienten erfolgt.

Die von der Klebestelle ausgehende Kontaminationsgefahr kann beträchtlich reduziert werden, wenn extrem reines Siliciumpulver, wie es zum Beispiel durch Aufmahlen der für elektronische Zwecke nach dem Czochralski- oder Zonenschmelzverfahren gezogenen Einkristalle, aber auch durch Zersetzung von Silanen oder Chlorsilanen aus der Gasphase abgeschieden werden kann oder durch Aufmahlen hochreinen polykristallinen Siliciums gewonnen werden kann, eingesetzt wird.

Im folgenden wird die Erfindung beispielhaft erläutert, ohne daß darin eine Einschränkung zu sehen ist.

Beispiele

Beispiel 1

Die miteinander zu verbindenden jeweils 5 cm² großen Stirnflächen zweier Graphitzylinder, die aus einer Graphitqualität mit einer Dichte von 1,80 gcm⁻³ gefertigt wurden, wurden zunächst gesäubert und entstaubt. In eine Komponente eines handelsüblichen Zweikomponentenklebers auf Polyurethanbasis wird soviel Siliciumpulver mit einer maximalen Partikelgröße von 50 μm eingerührt, bis

eine gerade noch streichfähige Paste entstanden ist. Nach dem anschließenden Vermischen mit dem Härter wurde die Masse gleichmäßig auf die zweite zu verklebende Flächen aufgetragen; anschließend wurden die Teile leicht gegeneinander gepreßt.

Die Klebeverbindung ließ man nun 12 h beim Raumtemperatur, dann 3 h bei 180°C aushärten Anschließend wurden die organischen Anteile des Klebers durch langsames Erhitzen der verbundenen Teile mit einer Aufheizgeschwindigkeit von 10°C/h auf 800°C unter Argon vercrackt, danach die Temperatur auf 1600°C gesteigert und dort 60 min gehalten.

Nach Abkühlen auf Raumtemperatur waren die beiden Graphitzylinder fest miteinander verbunden. Ein Biegeversuch zeigte, daß der Bruch nicht glatt an der verklebten Fläche erfolgt, sondern im Gefüge der miteinander verklebten Graphitzylinder. Die Festigkeit der Klebeverbindung übertraf also die des miteinander zu verbindenen Graphitmaterials.

Beispiel 2

Die Oberflächen zweier 10 x 10 cm² großer und 0,5 cm dicker flächig miteinander zu verklebenden Graphitplatten mit einer Dichte von 1,80 gcm⁻³ wurden wie unter Beispiel 1 beschrieben vorbehandelt. In eine Komponente eines handelsüblichen Zweikomponentenklebers auf Polyurethanbasis wurde eine Mischung aus äquimolaren Mengen Siliciumpulver mit einem maximalen Partikeldurchmesser von 50 μm sowie Graphitpulver mit einer maximalen Partikelgröße von 10 μm eingearbeitet, bis die Masse eine gerade noch streichfähige Konsistenz angenommen hat. Nach Vermischen mit der Härterkomponente wurden die beiden zu verklebenden Flächen mit der Klebemasse bestrichen und unter leichtem Druck zusammen gepreßt. Die Aushärtung und Vercrackung der organischen Anteile erfolgte wie unter 1. beschrieben. Die Endfestigkeit der Klebeverbindung wurde durch dreistündiges Erhitzen auf 1800°C erreicht. Nach dem Abkühlen waren die beiden Graphitplatten fest miteinander verbunden. Eine metallographische Untersuchung der Klebeverbindung zeigte eine vollständige Umwandlung des Siliciums in Siliciumcarbid.

Beispiel 3

Zum flächigen Verkleben zweier 10 x 10 cm² großer und 0,5 cm dicker Graphitplatten mit einer Dichte von 1,80 g⁻³ wurden zwischen diese Graphitplatten eine 9 x 9 cm² große und 0,3 mm dicke Siliciumscheibe so gelegt, daß die Ränder der Graphitplatten 5 mm von den Rändern der Siliciumscheibe entfernt waren. Diese Anordnung wurde in waagerechter Lage 3 Stunden lang unter Argon auf 1600°C erhitzt Zur Abkühlung in einem Temperaturgradienten werden die Platten in ebenfalls waagerechter Lage mit einer Geschwindigkeit von 40 cm/h in eine 1.300°C heiße Zone gefahren. Nach dem Abkühlen auf Raumtemperatur waren die Graphitplatten extrem fest miteinander verbunden. Eine metallographische Untersuchung der Kontaktfläche zeigte, daß Silicium unter partieller Umwandlung in SiC in die Porenräume beider Graphitplatten eingedrungen war.

Beispiel 4

Zwei durch Nut und Feder rechtwinklig zusammensteckbare 10 x 10 cm² große und 10 mm dicke Graphitplatten mit einer Dichte von 1,80 gcm⁻³ wurden im zusammengefügten Zustand 60 min lang in eine 1600°C heiße Siliciumschmelze getaucht; anschließend wurde das Formteil aus der Schmelze herausgezogen und abgekühlt. Durch Behandlung mit 80°C warmer 30 %iger Natronlauge wurde anhaftendes überschüssiges Silicium entfernt. Die Graphitplatten waren auch nach dreimaligem Erhitzen auf 1600°C noch extrem fest und starr miteinander verbunden. Eine metallographische Untersuchung der Kontaktstelle zeigte freies Silicium zusammen mit Siliciumcarbid sowohl an den Kontaktflächen der Graphitplatten als auch im Porenraum des den Kontaktflächen unmittelbar benachbarten Graphitgefüges.

Ansprüche

1. Ein- oder Mehrkomponentenkleber zum Verbinden von Graphitformteilen, dadurch gekennzeichnet, daß mindestens eine Komponente des Ein- oder Mehrkomponentenklebers, vorzugsweise aus der Klasse der Reaktionsklebestoffe, Siliciumpulver enthält.

2. Ein- oder Mehrkomponentenkleber gemäß Anspruch 1, dadurch gekennzeichnet, daß das Siliciumpulver eine Partikelgröße < 300 μm aufweist.

3. Ein- oder Mehrkomponentenkleber gemäß einem der Ansprüche 1 oder 2, daduch gekennzeichnet, daß mindestens eine Komponente des Ein- oder Mehrkomponentenklebers, vorzugsweise aus der Klasse der Reaktionsklebestoffe, ein Gemisch aus Siliciumpulver einer bevorzugten Partikelgröße < 300 μm und Graphitpulver einer bevorzugten Partikelgröße < 300 μm mit einem Gewichtsanteil von mindestens 1 Mol-% Graphit, vorzugsweise mit einem Gewichtsanteil von 50 Mol-% Graphit, enthält.

4. Ein- oder Mehrkomponentenkleber gemäß einem oder mehrerer der Ansprüche 1 bis 3, dadurch gekennzeichnet, daß eine Komponente eines Mehrkompo nentenkleber Siliciumpulver und eine andere Komponente Graphitpulver enthält, mit Partikelgrößen jeweils < 300 μm.

5. Ein- oder Mehrkomponentenkleber gemäß einem oder mehrerer der Ansprüche 1 bis 4, dadurch gekennzeichnet, daß das Silicium eine Verunreinigungsgesamtkonzentration < 10 000 ppm aufweist.

6. Verfahren zur Herstellung dauerhafter Klebeverbindungen zwischen Graphitformteilen, dadurch gekennzeichnet, daß die miteinander kontaktierten Flächen oder Stellen der Graphitformteile ganz oder teilweise der Einwirkung flüssigen Siliciums ausgesetzt werden.

7. Verfahren gemäß Anspruch 6, dadurch gekennzeichnet, daß zwischen die miteinander zu verklebenden Kontaktflächen oder Kontaktstellen der Formteile elementares Silicium in Pulverform mit einer bevorzugten Partikelgröße < 300 μm und/oder in Form von dünner Plättchen gebracht wird und die Kontaktstelle mindestens auf Schmelztemperatur des Siliciums, vorzugsweise auf Temperaturen im Bereich 1450 - 2500°C, gebracht wird.

8. Verfahren gemäß einem der Ansprüche 6 oder 7, dadurch gekennzeichnet, daß auf mindestens eine der zu verklebenden Kontaktflächen oder Kontaktstellen ein Ein- oder Mehrkomponentenkleber gemäß einem oder mehrerer der Ansprüche 1 bis 5 aufgetragen wird, die Graphitteile miteinander an den zu verklebenden Stellen in Kontakt gebracht, die organischen Komponenten des Klebers durch Erhitzen auf 200 - 1000°C unter Luftausschluß vercrackt werden und die Temperatur an den Kontaktstellen oder Kontaktflächen mindestens auf Schmelztemperatur des Siliciums, vorzugsweise in den Bereich 1450 -2500°C, erhöht wird.

9. Verfahren gemäß einem oder mehrerer Ansprüche 6 bis 8, dadurch gekennzeichnet, daß das im Bereich der Kontaktzone in das Gefüge der zu verbindenden Graphitformteile eingedrungene Silicium durch Erhitzen auf mindestens 1410°C, vorzugsweise auf 1450 -2500°C, vollständig zu Siliciumcarbid umgewandelt wird.

10. Verfahren zum dauerhaften Verkleben von Graphitformteilen nach einem oder mehreren der Ansprüche 6 bis 9, dadurch gekennzeichnet, daß die Abkühlung der miteinander verklebten Graphitformteile in einem Temperaturgradienten erfolgt.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | DE-B-1077132 (THE MORGAN CRUCIBLE COMPANY LTD) <br> * Spalte 1, Zeilen 19 - 46; Ansprüche 1-3 * <br> * Spalte 2, Zeilen 49 - 31 * | 1, 2, 6, 7 | C04B37/00 |
| Y | | 3-5, 9 | |
| | --- | | |
| Y | EP-A-180924 (HELIOTRONIC FORSCHUNGS- UND ENTWICKLUNGSGESELLSHAFT) <br> * Seite 2, Zeile 24 - Seite 3, Zeile 6 * <br> * Seite 4, Zeile 26 - Seite 5, Zeile 2 * <br> * Seite 7, Zeile 3 - Seite 16, Zeile 16 * <br> * Seite 14, Zeilen 14 - 25 * <br> * Seite 19, Zeilen 1 - 26; Ansprüche 1-4, 9 * | 3-5 | |
| A | | 1-2, 6-7 | |
| | --- | | |
| Y | DE-A-3311553 (KERNFORSCHUNGSANLAGE JÜLLIG) <br> * Seite 4, Zeile 12 - Seite 5, Zeile 2 * <br> * Seite 6, Zeilen 14 - 28; Ansprüche 1, 8, 9 * <br> * Seite 7, Zeilen 6 - 35 * | 9 | |
| A | | 1-8 | |
| | --- | | |
| A | US-A-2319323 (A. H. HEYROTH) <br> * Spalte 1, Zeile 47 - Spalte 2, Zeile 34 * <br> * Spalte 3, Zeile 47 - Spalte 4, Zeile 7; Anspruch 8 * | 1, 3, 6, 7 | RECHERCHIERTE SACHGEBIETE (Int. Cl.5 ) |
| | --- | | C04B37 <br> C04B41 |
| A | GB-A-2137975 (UNITED KINGDOM ATOMIC ENERGY AUTHORITY) <br> * das ganze Dokument * | 1, 3-4, 6 | |
| | ----- | | |

Der vorliegende Recherchenbericht wurde für alle Patentansprüche erstellt

| Recherchenort | Abschlußdatum der Recherche | Prüfer |
|---|---|---|
| DEN HAAG | 25 JULI 1990 | OLSSON S.A. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes
    Dokument

EPO FORM 1503 03.82 (P0403)